# FASCICULE DE BREVET EUROPEEN

(11) **EP 0 993 730 B1**
(45) Date de publication et mention de la délivrance du brevet: **22.10.2003**
(21) Numéro de dépôt: 97925810.0
(22) Date de dépôt: 20.06.1997
(51) Int. Cl.: H04M 3/50

(54) **SYSTEME ET PROCEDE DE CODAGE ET DE DIFFUSION D'INFORMATIONS VOCALES**
SYSTEM UND VERFAHREN ZUR KODIERUNG UND ZUR AUSSENDUNG VON SPRACHDATEN
SYSTEM AND METHOD FOR CODING AND BROADCASTING VOICE DATA

(43) Date de publication de la demande: 19.04.2000
(73) Titulaire: Swisscom Fixnet AG, 3050 Bern (CH)
(72) Inventeur: VAN KOMMER, Robert, CH-1752 Villars-sur-Glâne (CH)
(74) Mandataire: BOVARD AG - Patentanwälte
(86) Numéro de dépôt international: CH9700246
(87) Numéro de publication internationale: WO98059486

(56) Documents cités:
- WO-A-96/18258
- GB-A- 2 165 969
- GB-A- 2 249 701
- US-A- 5 150 410

## Description

La présente invention concerne un système et un procédé de diffusion d'informations vocales. Plus particulièrement, la présente invention concerne un système et un procédé de téléservices vocaux, permettant à un utilisateur d'accéder au moyen d'un téléphone, ou de tout type de dispositif muni de moyens d'émission acoustiques, à des informations diffusées par une plate-forme centralisée dans un réseau de télécommunication.

En dépit de l'émergence d'autres systèmes de diffusion automatique d'informations, par exemple internet ou télétexte, l'offre de téléservices vocaux tend à se développer. Ces services peuvent en effet être utilisés sans équipements particuliers, si ce n'est un combiné téléphonique, et peuvent donc être consultés aisément depuis n'importe où, par exemple au moyen d'un téléphone portable. En outre, l'accès à l'information est possible sans connaissances techniques particulières. Des exemples de téléservices vocaux populaires comprennent par exemple l'horloge parlante, la diffusion des prévisions météorologiques, des résultats sportifs, des cours de la bourse, etc...

Les informations diffusées sont généralement mémorisées sous forme numérique ou enregistrées sur un support d'enregistrement audio dans une plate-forme centralisée et reliée au réseau téléphonique. L'utilisateur prend l'initiative de consulter ces informations en composant sur son combiné téléphonique le numéro de téléphone de la plate-forme. Une connexion téléphonique ordinaire est alors établie entre la plate-forme centralisée et l'utilisateur, et un dialogue vocal est effectué via cette connexion. La connexion est bidirectionnelle, même lorsque l'information est diffusée dans une seule direction (c'est typiquement le cas pour un service d'horloge parlante) ou majoritairement dans une direction (par exemple dans les systèmes où les seules réponses attendues de l'utilisateur se limitent à l'introduction d'un mot de passe ou de réponses brèves du type oui-non). La charge occasionnée sur le réseau de télécommunication est donc sans mesure avec le volume effectif d'informations utiles transmis.

Les progrès observés depuis quelques années dans le domaine du traitement de la voix, en particulier de la synthèse de voix (systèmes TTS - « text-to-speech »), de l'analyse de voix et de la reconnaissance vocale de personne, ouvrent tout grand la porte à de nouveaux systèmes de téléservices vocaux, étendant les possibilités offertes par les systèmes conventionnels. Le domaine d'application de ces nouvelles technologies n'est plus limité à des services de diffusion unidirectionnelle d'information (comme l'horloge parlante), mais concerne également des services d'information interactifs, offrant des possibilités de dialogue entre l'appelant et la plate-forme de téléservice vocal. Ces systèmes interactifs sont généralement connus sous le sigle anglophone IVR (Interactif Voice Response Systems) et appliqués notamment pour des services de télébanking. On connaît par exemple déjà des systèmes offrant à l'utilisateur la possibilité de choisir, au moyen de commandes vocales, les informations qu'il désire écouter, voire de modifier ces informations ou d'initier le lancement de programmes d'applications exécutées par la plate-forme de téléservice vocal. A titre d'exemple, le document de brevet WO88/05239 décrit un système permettant d'effectuer des sondages ou des votations de manière automatique. WO93/26113 décrit un autre système de messagerie vocale largement automatisé.

Les systèmes de téléservice vocal sont généralement opérés au moyen d'une plate-forme centralisée, pour des raisons évidentes de mise à jour des informations et de coût. La longueur de la connexion téléphonique établie dépend donc de la distance entre le point d'appel de l'utilisateur et l'emplacement de la plate-forme. L'attrait d'un téléservice vocal diminue cependant fortement pour les abonnés qui ne peuvent pas l'appeler en tarif local. Dans de nombreux cas, le gestionnaire du réseau de télécommunication propose donc un tarif d'appel unique pour un téléservice donné, qui pénalise les abonnés les plus proches et est déficitaire pour les appels d'abonnés domiciliés plus loin.

Le document de brevet EP-A2-0559981 décrit un système de téléservice vocal interactif dans lequel l'utilisateur est connecté à la plate-forme centralisée au moyen d'une connexion entièrement numérique. Le but de ce système est essentiellement de limiter le nombre de conversions analogiques-numériques et numériques-analogiques entre l'utilisateur et la plate-forme de téléservice vocal. Les problèmes mentionnés ci-dessus ne sont cependant pas résolus par ce système.

Un but de la présente invention est donc de proposer un système de téléservice vocal amélioré. Plus particulièrement, un but de la présente invention est de proposer un service de téléservice vocal occasionnant une charge moindre du réseau de télécommunication.

Ces buts sont atteints notamment au moyen des éléments des parties caractérisantes des revendications indépendantes, des modes de réalisation préférentiels étant indiqués dans les revendications dépendantes.

L'invention part de la constatation que, dans l'art antérieur, les messages vocaux échangés, notamment les informations vocales diffusées par la plate-forme vers l'appelant, nécessitent une largeur de bande beaucoup plus importante que le minimum requis pour transmettre le seul contenu sémantique de l'information transmise.

Les buts de l'invention sont donc atteints en transmettant, non pas des signaux audio analogiques ou numériques (phonétiques), mais des messages vocaux contenant uniquement une information sur la sémantique de ces signaux.

Dans le cas d'un système numérique, la transmission de milliers d'échantillons de voix successifs, codés par exemple sur 8 bits, est ainsi remplacée par la transmission de quelques caractères, par exemple de quelques codes ASCII correspondant à la représentation en mode texte ou pseudo-texte du contenu sémantique des messages.

Le taux de compression ainsi obtenu, et donc la charge du réseau, est très élevé, typiquement de l'ordre de 1 :500 par exemple, selon les messages et le type d'application. La conversion du message sémantique en signal audio est effectuée de préférence par un point d'accès réseau à proximité de l'utilisateur, en sorte qu'un signal audio à grande largeur de bande est transmis seulement entre le point d'accès réseau et l'utilisateur, soit sur une fraction de la distance totale séparant l'utilisateur de la plate-forme de téléservice.

Etant donné le débit d'information très faible obtenu grâce au procédé de l'invention, et la nature irrégulière de ce débit, notamment dans le cas de systèmes interactifs, les messages codés sous forme sémantique sont avantageusement transmis sous forme de paquets entre la plate-forme centralisée et le ou les points d'accès réseau. Avantageusement, le réseau de télécommunication reliant la plate-forme centralisée aux points d'accès réseau est alors constitué par un réseau à transmission de paquets, par exemple un réseau au protocole ATM et/ou internet (TCP/IP). Dans ce dernier cas, les points d'accès réseau peuvent avantageusement être constitués par des POPs (Points of Presence) distribués du réseau intemet.

L'utilisateur souhaitant recourir à un système de téléservice vocal, par exemple écouter les prévisions météorologiques, appelle au moyen de son téléphone le POP le plus proche. Cette communication peut généralement être établie au tarif local. Le POP contacte alors la plate-forme centralisée gérant le système de téléservice vocal automatique, qui lui transmet un message codé incluant une représentation sémantique contenant les informations requises, par exemple un fichier texte annonçant les prévisions météorologiques pour la région considérée. Ce fichier texte est converti en signal audio (analogique ou numérique) au moyen d'un dispositif de synthèse de voix dans le POP (dispositif TTS, « Text-To-Speech »), et le signal audio obtenu est transmis à l'utilisateur qui peut alors l'écouter.

Une connexion téléphonique ordinaire est seulement requise entre l'utilisateur et le point d'accès réseau (POP). Etant donné la forte concentration de points d'accès au réseau internet, cette connexion peut très souvent être établie en bénéficiant du tarif local. Entre le POP et la plate-forme, la connexion est avantageusement de type internet, et son coût ne dépend donc pas de la distance. En outre, le volume d'informations échangé entre le POP et la plate-forme est très fortement réduit grâce à la conversion sous forme sémantique des messages vocaux.

Au cas où un temps de réponse court est nécessaire, par exemple en cas de communication interactive, la paquetisation des messages dans internet peut causer un retard d'autant plus grand que la compression est importante. Un paquetiseur n'expédie en effet généralement que des paquets complets. Une solution permettant de réduire le délai est d'insérer des octets de bourrage après le message utile, permettant de remplir les paquets et donc de les transmettre immédiatement. Une solution préférentielle consiste à multiplexer plusieurs messages à l'intérieur de chaque paquet, puis à les démultiplexer à l'intérieur du réseau de télécommunication.

Avantageusement, les points d'accès réseau distribués contiennent une mémoire de type cache qui mémorise temporairement les messages transmis depuis la plate-forme centralisée. Une connexion avec la plate-forme n'est ainsi pas requise à chaque interrogation par un utilisateur, ce qui contribue à réduire encore la charge à travers le réseau de télécommunication. La mémoire de type cache peut soit mémoriser les messages codés sous forme sémantique, ce qui permet de réduire considérablement la taille de mémoire requise, soit les signaux audio synthétisés pour limiter le nombre de conversions nécessaires.

L'invention sera mieux comprise à l'aide de la description donnée à titre d'exemple non limitatif et illustrée par la figure unique qui montre sous forme schématique un système complet de diffusion d'informations vocales à travers un réseau de télécommunication.

La description concerne principalement une application de l'invention à un système de téléservice vocal, par exemple un service de diffusion de prévisions météorologiques accessible par téléphone. Il est important néanmoins de voir que l'invention peut aussi être appliquée à n'importe quel type de système de diffusion d'informations vocales monodirectionnel, bidirectionnel ou interactif.

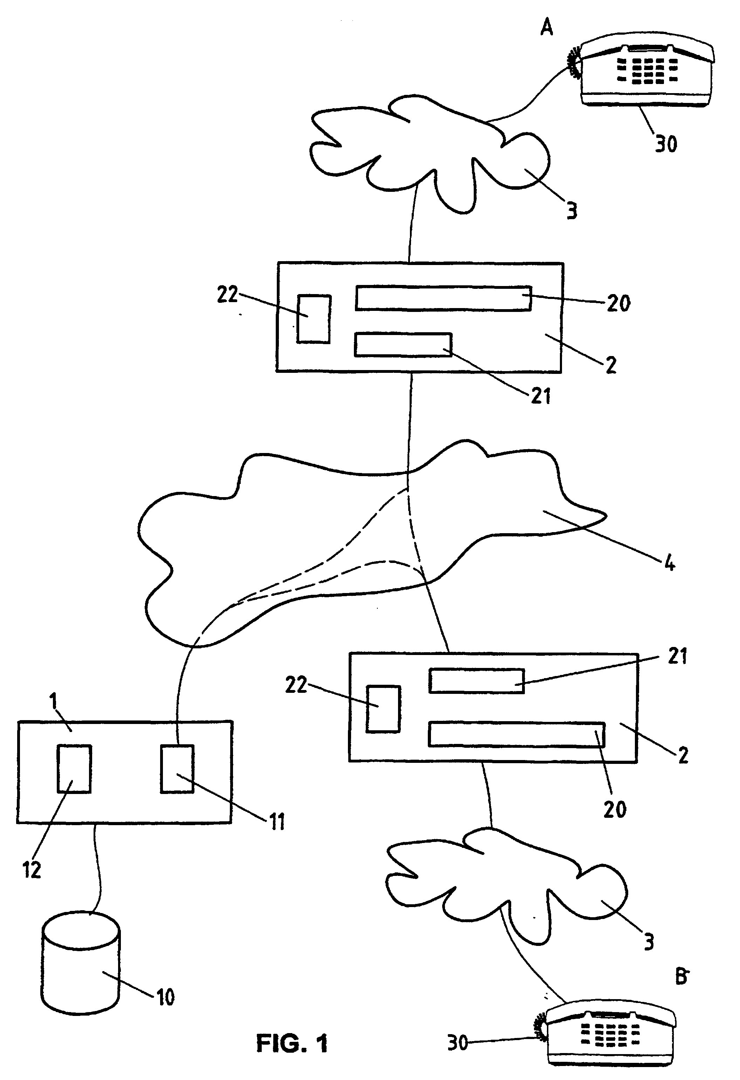

Sur la figure 1, le numéro de référence 1 désigne une plate-forme centralisée pour système de téléservice vocal. La plate-forme 1 fournit l'information requise et, dans le cas d'un système de téléservice interactif, gère le dialogue avec l'utilisateur. La plate-forme 1 contient de préférence une mémoire 10 mémorisant l'information à diffuser. Seul le contenu sémantique de l'information est mémorisé, par exemple sous forme de fichier texte, pseudo-texte ou sous n'importe quel format approprié. Des marqueurs prosodiques, ou d'autres types d'informations permettant d'améliorer la qualité de la voix synthétisée à partir de cette information, sont de préférence inclus dans ce fichier. Dans un autre mode de réalisation, la mémoire 10 contient des données audio, enregistrées par exemple sur une bande magnétique ou sur tout type de support analogique ou numérique approprié, qui sont converties à chaque lecture par des moyens d'analyse de voix en données codées incluant une représentation sémantique. Dans un troisième mode de réalisation, l'information diffusée par la plate-forme 1 n'est pas préparée en avance, mais générée par un système de synthèse de messages en fonction par exemple des réponses fournies par l'utilisateur dans le cas d'un téléservice interactif IVR.

La plate-forme 1 contient en outre de préférence des moyens d'analyse de voix, permettant d'analyser les réponses de l'utilisateur dans le cas d'un système interactif. La plate-forme 1 peut en outre comprendre des moyens de traitement aptes à exécuter n'importe quel type d'application appropriée selon le type de téléservice et les commandes données par l'utilisateur, par exemple débiter un compte bancaire dans le cas d'un service de télébanking interactif, ou enregistrer une réponse de l'utilisateur. Les moyens de gestion de dialogue, d'analyse de voix, de génération de messages et de traitement sont de préférence implémentés sous forme de modules informatiques pouvant être exécutés par des moyens de traitement 12. Ces modules ou programmes peuvent par exemple être stockés sur un support de données informatique, tel que disque dur, disquette ou cd-rom par exemple, pouvant être lu et exécuté par un dispositif programmable constituant la plate-forme 1. La plate-forme 1 contient en outre une interface 11 permettant de la connecter au réseau de télécommunication 4, dans ce cas un réseau à transmission de paquets de type intemet. La plate-forme 1 constitue donc dans cet exemple un serveur d'information intemet.

Le système de l'invention comporte en outre une pluralité de points d'accès réseau distribués 2. Seuls deux points d'accès réseau 2 sont représentés sur la figure 1 ; le nombre de points d'accès réseau peut cependant être quelconque et dépend principalement de la taille du réseau de télécommunication 4. Dans cet exemple, les points d'accès réseau sont constitués par des points de présence POP dans le réseau internet. Les points d'accès réseau 2 comprennent de manière générale une interface 21, permettant de les connecter au réseau 4, des moyens de traitement 20, ainsi qu'une mémoire cache 22 dont la fonction sera décrite plus bas. Les points d'accès réseau 2 comprennent en outre des moyens d'interface non représentés, par exemple des moyens de type modem, avec un réseau d'accès 3, par exemple avec un réseau de téléphonie fixe ou mobile conventionnel ou avec un réseau RNIS ou CATV.

Les moyens de traitement 20 comprennent des moyens de synthèse de voix, implémentés par exemple sous la forme d'un module informatique exécutable par un processeur universel. Les moyens de synthèse de voix permettent de convertir les messages vocaux codés sous forme sémantique en signaux audio phonétiques. Différents algorithmes et programmes commerciaux, désignés de manière générale sous le nom d'algorithmes TTS (Text-To-Speech), sont connus à cet effet dans l'art antérieur. Il va de soi que l'algorithme de synthèse de voix utilisé doit être compatible avec le codage sémantique adopté par la plate-forme centralisée 1, et être par exemple apte le cas échéant à reconnaître des marqueurs prosodiques, ou d'autres informations caractérisant la voix, insérés dans le fichier texte. Avantageusement, l'algorithme de synthèse de voix peut donc être téléchargé depuis la plate-forme centralisée 1 à travers le réseau intemet. Il est ainsi possible de mettre à jour facilement tous les points d'accès 2 lors de modifications de l'algorithme de codage sémantique utilisé par la plate-forme 1.

Le point d'accès réseau 2 est avantageusement constitué par un ordinateur, par exemple par un ordinateur polyvalent ou par un serveur de communication spécialisé, exécutant un programme informatique approprié mémorisé sur un support de donnée informatique adéquat.

La mémoire cache 22, qui peut être gérée par n'importe quel algorithme connu, mémorise temporairement les messages vocaux transmis depuis la plate-forme centralisée 1 via le réseau 4. La mémoire de type cache peut soit mémoriser la représentation sémantique des messages codés, ce qui permet de réduire considérablement la taille de mémoire requise, soit les signaux audio synthétisés pour limiter le nombre de conversions nécessaires. La mémoire cache peut par exemple être mise à jour à intervalles réguliers, par exemple 4 fois par jour dans le cas d'un téléservice d'informations météorologiques, ou après un nombre prédéfini de consultations par les utilisateurs, ou seulement lors d'une consultation par l'utilisateur, lorsqu'il s'avère que les données dans la mémoire cache sont trop anciennes pour être fiables.

Le procédé de l'invention, exécuté par le dispositif de la figure 1, va maintenant être expliqué à l'aide d'un exemple simple de téléservice diffusant des informations météorologiques. Il est bien entendu qu'il s'agit là d'une application donnée à titre d'exemple non limitatif, permettant de comprendre aisément le procédé de l'invention, mais que l'invention peut s'appliquer également à tout type de système de diffusion d'informations vocales.

L'utilisateur désirant écouter les prévisions météorologiques au moyen d'un système de téléservice selon l'invention compose sur son terminal 30 le numéro d'appel du service considéré, en Suisse par exemple le numéro 162. Une communication est alors établie à travers le réseau d'accès conventionnel 3 avec le point d'accès réseau 2 le plus proche, par exemple avec le fournisseur d'accès internet le plus proche. Selon la densité de points d'accès réseau 2, cette connexion peut être établie au tarif local, donc pour un coût très modique. L'utilisateur et le fournisseur du téléservice évitent donc de devoir se partager le coût d'une communication téléphonique entre le terminal 30 et le dispositif 1 généralement plus éloigné.

Après établissement de la communication, les moyens de traitement 20 dans le point d'accès réseau 2 vérifient si les informations requises, dans ce cas les prévisions météorologiques, sont contenues dans la mémoire cache 22. Si c'est le cas, et si les données mémorisées sont fiables, le contenu de la mémoire cache est lu et ces informations peuvent être écoutées par l'utilisateur. Si la mémoire cache 22 contient des informations déjà synthétisées sous forme de signal sonore, ce signal peut directement être émis au moyen de l'interface non représentée avec le réseau d'accès 3 et écouté au moyen du haut-parleur dans le dispositif 30. Si en revanche la mémoire cache 22 contient uniquement la représentation sémantique des messages codés, par exemple un fichier texte avec éventuellement des marqueurs prosodiques, ce fichier est converti par les moyens de traitement 20 en signal audio au moyen d'un module de synthèse de voix TTS, puis transmis au dispositif 30.

Lorsque la mémoire cache 22 ne contient pas les informations à jour requises par l'utilisateur, ou si le dispositif 2 ne comporte pas de mémoire cache, le point d'accès réseau envoie une requête à la plate-forme 1 via le réseau de transmission de paquets 4. Dans le cas d'un réseau intemet, cette requête peut par exemple être constituée par un message internet adressé à la plate-forme 1.

Dans le cas d'un téléservice monodirectionnel, c'est-à-dire d'un téléservice dans lequel l'information circule uniquement depuis la plate-forme 1 vers l'utilisateur, la plate-forme 1 génère alors l'information requise et l'envoie au point d'accès 2 choisi sous forme de message vocal codé incluant une représentation sémantique de l'information. Le message vocal envoyé par la plate-forme 1 peut dans cet exemple être constitué par un simple fichier en mode texte ou pseudo-texte indiquant les prévisions météorologiques demandées. Tout autre type de codage sémantique, par exemple un codage avec un alphabet phonétique, ou un codage utilisant des marqueurs prosodiques, peut cependant être utilisé dans le cadre de l'invention.

Le volume d'information transmis est très faible, en raison du codage sémantique, et peut donc être transmis très rapidement à travers le réseau de télécommunication 4. Le point d'accès réseau 2 convertit ensuite le message codé sous forme sémantique en signal audio grâce au moyens de synthèse de voix évoqués, et transmet comme ci-dessus ce signal audio à l'utilisateur à travers le réseau d'accès 3. L'utilisateur peut alors écouter ce signal audio au moyen du haut-parleur du dispositif 30.

Dans le cas d'un téléservice bidirectionnel, par exemple d'un téléservice interactif permettant à l'utilisateur d'influencer le fonctionnement de la plate-forme 1, la plate-forme 1 peut envoyer une question à l'utilisateur, par exemple lui demander quelles informations exactement il désire écouter. Par exemple, la plate-forme 1 peut envoyer un message vocal à l'utilisateur 1 lui demandant le nom de la région à laquelle doit se rapporter le bulletin météorologique. Ce message vocal est transmis sous forme sémantique vers la plate-forme 2, puis converti de la manière indiquée en un signal audio qui peut être écouté par l'utilisateur du terminal 30. L'utilisateur peut alors répondre, soit au moyen du clavier du dispositif 30, soit de préférence vocalement.

Dans le cas d'une réponse vocale, le point d'accès réseau 2 convertit, grâce à des moyens d'analyse de voix réalisés sous la forme d'un module informatique exécutable par les moyens de traitement 20, cette réponse en un message codé sous forme sémantique, et transmet cette réponse à la plate-forme 1. Les moyens de traitement adoptent alors un comportement dépendant de la réponse, et exécutent une procédure appropriée dépendant de l'application. Dans le cas d'un téléservice de diffusion de bulletins météorologiques, la procédure peut par exemple consister en la diffusion d'un bulletin correspondant à la région sélectionnée.

Ce bulletin est alors transmis de la manière décrite, codé sous forme sémantique et converti en signal audio par le point d'accès 2 afin de pouvoir être écouté par l'utilisateur. Selon l'algorithme de gestion choisi pour le cache 22, ce message peut également être copié dans ce cache.

Dans le cas le plus simple, le format des messages codés sous forme sémantique est simplement de type texte. Par exemple, des simples fichiers ASCII peuvent être échangés entre la plate-forme 1 et les points d'accès réseau 2. Un fichier texte ne contient toutefois aucun paramètres caractérisant la voix du lecteur, et ne permet pas de synthétiser aisément une voix naturelle. Pour améliorer la synthèse, il est préférable de transmettre un fichier pseudo-texte contenant des marqueurs prosodiques supplémentaires en sus du texte.

Il est naturellement possible de transmettre seulement une partie du message codé sous forme sémantique, et une autre partie, ou d'autres types de messages, sous forme de données audio.

Selon le type d'application de téléservice, il arrive souvent que le vocabulaire des messages susceptibles d'être échangés ne soit pas illimité. Par exemple, dans un système interactif, il se peut que les seules réponses que l'on attende de l'utilisateur soient des instructions de type oui ou non. Dans ce cas, la transcription sémantique des messages vocaux peut être simplifiée : au lieu de transmettre les lettres O, U, I ou N, O, N selon la réponse de l'utilisateur, il suffit de transmettre un seul bit 1 ou 0. Le taux de compression obtenu par rapport à une transmission d'une réponse de type oui ou non sous forme de signal audio, est de l'ordre de plusieurs milliers au moins. De la même façon, pour chaque application impliquant des messages susceptibles d'être transmis fréquemment à travers le réseau de télécommunication 4, il est possible d'optimiser le codage en réduisant le nombre de bits utilisés pour coder ces messages récurrents. De manière idéale, lorsque le vocabulaire des messages échangés par le procédé de l'invention est parfaitement déterminé à l'avance, le codage sémantique des mots du vocabulaire peut être effectué de manière à minimiser le nombre de bits codant chaque mot, en tenant compte éventuellement de la probabilité de transmission de chaque mot (code à longueur variable). Cette transcription, qui est également de type sémantique, est généralement plus efficace que la transcription littérale de chaque lettre des mots désignant un sème dans une langue donnée. Le codage sémantique peut également être basé sur une prédiction des réponses de l'utilisateur et évoluer de manière dynamique au cours du dialogue (représentation de la prédiction sémantique). Comme mentionné, un minimum d'information caractérisant la voix et/ou la prosodie peut avantageusement être transmis par exemple sous la forme de marqueurs prosodiques incorporés dans la représentation sémantique.

Pour réduire encore la taille des messages, les messages sémantiques peuvent avantageusement être transcodés au moyen d'un code à réduction de redondance, par exemple au moyen d'un code de Huffman ou de Ziv-Lempel.

Les messages transmis codés sous forme sémantique contiennent l'information sur le contenu du message. Il est possible au niveau de chaque point d'accès réseau 2 d'attribuer une autre voix aux messages convertis en signaux audio. Par exemple, la voix allouée au même message pourra être masculine ou féminine selon le point d'accès 2 effectuant la conversion de texte en voix. Différents distributeurs d'information revendant les informations fournies par la plate-forme 1, peuvent de cette manière aisément personnaliser leur téléservice. Il est aussi possible d'instaurer au début de la communication un dialogue permettant à l'utilisateur de choisir une voix lui convenant.

La flexibilité du système peut encore être grandement étendue en adaptant la langue du contenu des signaux audio synthétisés à partir de la représentation sémantique des messages. Dans l'exemple ci-dessus, une réponse positive codée sous forme sémantique par un bit 1 peut avec la même facilité être convertie en un extrait de voix disant « oui », « yes » ou « ja » par exemple. Il en va de même de tous les messages échangés entre la plate-forme 1 et les points d'accès 2, lorsque leur sémantique peut être exprimée aisément en différentes langues. Chaque gestionnaire de point d'accès réseau 2 peut de cette manière convertir les messages codés sous forme sémantique en messages audio exprimés dans la langue prédominante à l'emplacement géographique considéré. Il est également possible d'offrir à l'utilisateur des possibilités de sélection de langue, par commandes vocales ou au moyen de son clavier, ou d'utiliser un algorithme qui reconnaisse automatiquement la langue de l'utilisateur appelant pour lui fournir ensuite les informations requises dans cette langue. La langue des messages audio synthétisés peut aussi être déterminée d'après les indications fournies par le fichier client des abonnés au service.

La description ci-dessus évoque plus particulièrement le cas d'un utilisateur appelant la plate-forme de téléservice 1 au moyen d'un combiné téléphonique fixe ou mobile. Il est cependant possible d'utiliser au lieu d'un téléphone n'importe quel type de second dispositif 30 permettant d'établir une communication à travers le réseau de télécommunication à transmission de paquets 4 et muni de moyens d'émission acoustiques, par exemple de haut-parleur, permettant d'écouter les messages vocaux diffusés par la plate-forme 1. Par exemple, le second dispositif 30 peut être constitué par un ordinateur personnel ou portable muni d'un modem et d'un haut-parleur (terminal intelligent).

Dans ce cas, certaines opérations déléguées dans l'exemple de mode de réalisation ci-dessus à la plate-forme 1 ou au point d'accès réseau 2 peuvent être réalisées par le terminal intelligent 30. Par exemple, si le terminal est muni de moyens permettant de le connecter directement au réseau à transmission de paquets 4, la synthèse de voix peut être effectuée par le terminal intelligent plutôt que par le point d'accès réseau 2. Le point d'accès réseau 2 peut même être supprimé si le terminal est en mesure de se connecter directement avec la plate-forme 1 à travers le réseau 4. Par exemple, dans le cas où le réseau 4 est un réseau de type internet, et la plate-forme 1 un serveur vocal branché sur intemet, il est possible au moyen d'un ordinateur également connecté à internet de recevoir des messages vocaux codés sous forme sémantique et diffusés par la plate-forme 1 et de convertir ces messages codés en signaux audio, de préférence au moyen d'un logiciel de synthèse de voix de préférence téléchargé depuis la plate-forme 1. Le logiciel de synthèse de voix peut avantageusement être réalisé sous la forme d'un module informatique de type « plug-in » pour un logiciel de consultation (browser) de documents hypermédias transmis au travers du réseau intemet.

L'invention peut en outre être appliquée à l'échange d'informations vocales entre deux utilisateurs, par exemple entre les utilisateurs des deux combinés téléphoniques 30 A et B sur la figure 1. La voix de l'utilisateur A est alors analysée et convertie en un message codé incluant une représentation sémantique par les moyens de traitement 20 du point d'accès réseau 2 le plus proche de A. Ce message codé est ensuite transmis à travers le réseau à transmission de paquets 4 vers le point d'accès réseau 2 le plus proche de B, où elle est synthétisée par les moyens de synthèse de l'unité de traitement 20 en un signal audio transmis à B via la connexion locale à travers le réseau d'accès 3. Les réponses de B sont transmises à A de manière similaire en sens inverse. Ce procédé permet par exemple des connexions longue distance à des tarifs imbattables, en raison de la compression très importante obtenue par le codage sémantique et de la transmission par paquets. La faible taille des messages codés sous forme sémantique permet d'effectuer des dialogues en temps réel même lorsque le réseau 4 est très chargé, ce qui n'est pas toujours le cas des systèmes connus de téléphonie par internet (« intemet vocal chat ») dans lesquels des données audionumériques sont transmises. Le prix à payer est naturellement une perte importante d'information relative à la diction ou à la prononciation de l'interlocuteur, dont la voix est remplacée par celle impersonnelle du synthétiseur de voix.

Pour pallier à cet inconvénient, il est possible si A et B ont fréquemment des conversations qu'ils s'expédient, une seule fois, un fichier contenant des paramètres caractérisant leur voix, et permettant aux moyens de synthèse de voix respectifs de synthétiser, à partir des messages reçus, des voix aussi proches que possible de celles de B, respectivement A.

Ce procédé peut en outre être utilisé en combinaison avec un procédé de téléphonie par internet classique, pour pallier au problème de lenteur de transmission de signaux audio à travers le réseau 4. Dans ce cas, les messages sont transmis de manière classique, sous forme de données audionumériques ou analogiques. Simultanément, un message contenant la transcription sémantique du message audio, de taille nettement inférieure à celle du message audio, est transmis en parallèle. Ce message est généralement reçu complètement bien avant le message audio. Si, après un intervalle de temps prédéterminé, le message audio n'est toujours pas parvenu à son destinataire, un nouveau message audio est synthétisé au niveau du destinataire à partir du message codé sous forme sémantique, et ce nouveau message est diffusé au destinataire sans attendre la réception complète du message audio original. La synthèse du nouveau message audio à partir du message codé sous forme sémantique peut avantageusement être effectuée en utilisant la connaissance des paramètres de la voix de l'interlocuteur, acquise lors d'échanges antérieurs de messages. Ce procédé permet en outre au destinataire d'avoir une transcription écrite du message vocal.

Ce procédé de communication direct entre deux interlocuteurs A et B s'avère particulièrement intéressant lorsque la langue des signaux audio synthétisés à partir des messages transmis codés sous forme sémantique est différente pour A et pour B. Dans ce cas, il est possible de réaliser des systèmes de traduction automatique en temps réel sollicitant très peu le réseau de communication. Les messages vocaux de A, par exemple en français, sont convertis en messages ne contenant qu'une information sémantique au niveau du point d'accès réseau proche de A, puis transmis sous cette forme codée jusqu'au point d'accès réseau proche de B. Dans ce point d'accès réseau, un signal audio dans une autre langue, par exemple en japonais, est synthétisé à partir des informations sémantiques reçues, puis diffusé en japonais à l'attention de B. Les réponses de B sont transmises à A et traduites du japonais au français de manière opposée.

## Revendications

1. Système de diffusion d'informations vocales à travers un réseau de télécommunication (4), comprenant les éléments suivants :
au moins un premier dispositif (1) connecté audit réseau de télécommunication et comprenant des moyens (10) pour diffuser des messages dans ledit réseau,
au moins un second dispositif (30) permettant d'établir à travers ledit réseau de télécommunication (4) une communication avec ledit premier dispositif (1), et muni de moyens d'émission acoustiques permettant d'écouter des signaux audio correspondant aux dits messages diffusés par ledit premier dispositif,
**caractérisé en ce que** lesdits messages sont transmis à travers ledit réseau de télécommunication sous forme codée, ledit code incluant une représentation sémantique des messages,
et **en ce que** lesdits seconds dispositifs (30) sont connectés audit réseau de télécommunication (4) par l'intermédiaire d'une ou plusieurs points d'accès au réseau (2) distribués et comprenant des moyens de synthèse de voix (20) aptes à convertir lesdits messages codés en signaux audio.

2. Système selon l'une des revendications précédentes, **caractérisé en ce que** ledit premier dispositif (1) est une plate-forme pour système de téléservice vocal automatique.

3. Système selon l'une des revendications précédentes, **caractérisé en ce qu'**il comporte plusieurs point d'accès au réseau distribués (2) géographiquement, et **en ce que** les messages expédiés par ledit premier dispositif (1) à destination d'un desdits seconds dispositifs (30) sont transmis sous forme codée jusqu'à un point d'accès au réseau (2) proche dudit second dispositif, synthétisés en signaux audio dans ledit point d'accès au réseau (2), et transmis sous forme de signaux audio entre ledit point d'accès au réseau (2) et ledit second dispositif (30).

4. Système selon l'une des revendications précédentes, **caractérisé en ce que** ledit au moins un second dispositif (30) est relié audit au moins point d'accès au réseau (2) par l'intermédiaire d'un réseau d'accès (3).

5. Système selon l'une des revendications précédentes, **caractérisé en ce que** ledit réseau de télécommunication (4) est un réseau à transmission de paquets.

6. Système selon l'une des revendications précédentes, **caractérisé en ce que** ledit réseau de télécommunication (4) est un réseau de type internet, et **en ce que** ledit au moins un second dispositif (30) est un terminal intemet.

7. Système selon la revendication précédente, **caractérisé en ce que** ledit réseau est un réseau à transmission de paquets, et **en ce que** plusieurs messages peuvent être multiplexés à l'intérieur de chaque paquet

8. Système selon l'une des revendications précédentes, **caractérisé en ce que** lesdits points d'accès au réseau (2) comprennent des moyens de reconnaissance de parole (20) aptes à convertir des signaux audio provenant dudit au moins un second dispositif (30) en messages codés incluant une représentation sémantique desdits signaux, et des moyens pour expédier lesdits messages codés dans ledit réseau de télécommunication (4), et **en ce que** ledit au moins un premier dispositif (1) est apte à recevoir lesdits messages codés.

9. Système selon la revendication précédente, **caractérisé en ce que** ladite plate-forme pour système de téléservice vocal automatique (1) permet des dialogues interactifs et est apte à analyser lesdits messages codés expédiés par ledit au moins un second dispositif (30) et à diffuser une réponse dans ledit réseau de télécommunication (4) dépendant desdits messages reçus.

10. Système selon l'une des revendications précédentes, **caractérisé en ce que** lesdits moyens pour diffuser des messages dans ledit réseau comportent des moyens de stockage (10) desdits messages codés incluant une représentation sémantique et des moyens de lecture desdits messages stockés.

11. Système selon l'une des revendications précédentes, **caractérisé en ce que** lesdits moyens pour diffuser des messages dans ledit réseau comportent des moyens de stockage (10) desdits messages sous forme de signaux audio et des moyens de lecture desdits messages stockés et de reconnaissance de parole aptes à convertir lesdits signaux audio en messages codés incluant une représentation sémantique.

12. Système selon l'une des revendications précédentes, **caractérisé en ce que** ladite représentation sémantique optimise la longueur de messages codés susceptibles d'être transmis fréquemment à travers ledit réseau.

13. Système selon l'une des revendications précédentes, **caractérisé en ce que** ledit code inclut une représentation de la prédiction sémantique des messages.

14. Système selon l'une des revendications précédentes, **caractérisé en ce que** lesdits messages codés incluent des informations caractérisant la voix et/ou la prosodie.

15. Système selon l'une des revendications précédentes, **caractérisé en ce que** ledit au moins point d'accès au réseau (2) comprend une mémoire de type cache (22) mémorisant les messages expédiés par ledit premier dispositif (1).

16. Système selon la revendication précédente, **caractérisé en ce que** ladite mémoire de type cache (22) stocke les messages sous forme codée, incluant une représentation sémantique.

17. Système selon la revendication 15, **caractérisé en ce que** ladite mémoire de type cache (22) stocke les messages audio synthétisés à partir desdits messages codés.

18. Système selon l'une des revendications précédentes, **caractérisé en ce qu'**au moins certains moyens de synthèse de voix (20) aptes à convertir lesdits messages codés en signaux audio sont intégrés dans un second dispositif (30).

19. Système selon la revendication précédente, **caractérisé en ce que** lesdits moyens de synthèse de voix sont implémentés sous la forme d'un module « plug-in » pour un browser internet.

20. Système selon l'une des revendications précédentes, **caractérisé en ce que** lesdits moyens de synthèse de voix (21) aptes à convertir lesdits messages codés incluant une représentation sémantique en signaux audio sont programmés au moyen d'un module informatique, et **en ce que** ledit premier dispositif (1) et ledit au moins un point d'accès au réseau (2) comportent des moyens complémentaires et aptes à coopérer pour télécharger ledit module informatique depuis ledit premier dispositif (1) vers ledit au moins un point d'accès au réseau (2).

21. Système selon l'une des revendications 3 à 20, **caractérisé en ce qu'**il comporte plusieurs point d'accès au réseau distribués (2) sur plusieurs régions géographiques, et **en ce que** la langue desdits signaux audio synthétisés à partir desdits messages codés par lesdits moyens de synthèse de voix (20) dépend de la langue prédominante à l'emplacement géographique dudit point d'accès (2).

22. Système selon l'une des revendications précédentes, **caractérisé en ce que** la langue desdits signaux audio synthétisés à partir desdits messages codés est déterminée par l'utilisateur dudit au moins un second dispositif (30).

23. Plate-forme pour système de téléservice vocal automatique (1) apte à être connecté à un réseau de télécommunication (4) et comprenant des moyens pour générer des messages vocaux et les diffuser dans ledit réseau de télécommunication (4),
**caractérisé en ce que** lesdits messages sont diffusés dans ledit réseau de télécommunication sous forme codée, ledit code incluant une représentation sémantique desdits messages.

24. Plate-forme selon la revendication précédente, **caractérisée en ce que** lesdits moyens pour diffuser des messages dans ledit réseau sont constitués par des moyens de stockage (10) desdits messages codés et par des moyens de lecture desdits messages stockés.

25. Plate-forme selon la revendication 23, **caractérisée en ce que** lesdits moyens pour diffuser des messages dans ledit réseau comportent des moyens de stockage (10) desdits messages sous forme de signaux audio et des moyens de lecture desdits messages stockés et de reconnaissance de parole aptes à convertir lesdits signaux audio en messages codés incluant une représentation sémantique.

26. Plate-forme selon l'une des revendications 23 à 25, **caractérisée en ce qu'**elle permet des dialogues interactifs et est apte à analyser des messages codés incluant une représentation sémantique reçus à travers ledit réseau (4) et à diffuser une réponse dépendant desdits messages reçus.

27. Plate-forme selon l'une des revendications 23 à 26, **caractérisée en ce que** ladite représentation sémantique optimise la longueur de messages codés susceptibles d'être transmis fréquemment à travers ledit réseau.

28. Plate-forme selon l'une des revendications 23 à 27, **caractérisé en ce que** ledit code inclut une représentation de la prédiction sémantique des messages.

29. Plate-forme selon l'une des revendications 23 à 28, **caractérisée en ce que** lesdits messages codés incluent des informations caractérisant la voix et/ou la prosodie.

30. Plate-forme selon l'une des revendications 23 à 29, **caractérisée en ce qu'**elle est apte à être connectée à un réseau de télécommunication (4) à transmission de paquet.

31. Plate-forme selon l'une des revendications 23 à 30, **caractérisée en ce qu'**elle est apte à être connectée à un réseau de télécommunication (4) de type intemet.

32. Plate-forme selon l'une des revendications 23 à 31, **caractérisée par** des moyens permettant de téléexporter à travers ledit réseau de télécommunication (4) un module informatique de synthèse de voix permettant de convertir lesdits messages codés incluant une représentation sémantique en signaux audio.

33. Point d'accès réseau (2) apte à être connecté à un réseau de télécommunication à transmission de paquets et comprenant des moyens pour établir une communication avec un autre dispositif (1) connecté audit réseau et pour recevoir des messages, notamment des messages vocaux diffusés par ledit autre dispositif,
**caractérisé par** des moyens de synthèse de voix (20) aptes à convertir des messages vocaux codés incluant une représentation sémantique diffusés par ledit autre dispositif (1) en signaux audio, et par des moyens pour expédier à travers un réseau d'accès (3) lesdits signaux audio vers au moins un second dispositif (30).

34. Point d'accès réseau (2) selon la revendication précédente, **caractérisé par** des moyens de reconnaissance de parole aptes à convertir des signaux audio reçus dudit au moins un second dispositif (30) en messages codés incluant une représentation sémantique, et par des moyens (21) pour expédier lesdits messages codés sous forme sémantique dans ledit réseau de télécommunication à transmission de paquets (4).

35. Point d'accès réseau (2) selon l'une des revendications 33 ou 34, **caractérisé en ce que** ladite représentation sémantique optimise la longueur de messages codés susceptibles d'être transmis fréquemment à travers ledit réseau.

36. Point d'accès réseau (2) selon l'une des revendications 33 à 35, **caractérisé en ce que** ledit code inclut une représentation de la prédiction sémantique des messages.

37. Point d'accès réseau (2) selon l'une des revendications 33 à 36, **caractérisé en ce que** lesdits messages codés incluent des informations caractérisant la voix et/ou la prosodie.

38. Point d'accès réseau (2) selon l'une des revendications 33 à 37, **caractérisé par** une mémoire de type cache (22) pour les messages reçus.

39. Point d'accès réseau (2) selon la revendication précédente, **caractérisé en ce que** ladite mémoire de type cache (22) stocke les messages sous forme codée incluant une représentation sémantique.

40. Point d'accès réseau (2) selon la revendication précédente, **caractérisé en ce que** ladite mémoire de type cache (22) stocke les messages audio synthétisés à partir desdits messages codés.

41. Point d'accès réseau (2) selon l'une des revendications 33 à 40, **caractérisé par** des moyens pour expédier des signaux audio synthétisés à partir desdits messages codés ou pour recevoir des signaux audio à coder sur ledit réseau de télécommunication.

42. Point d'accès réseau (2) selon l'une des revendications 33 à 41, **caractérisé en ce que** ledit réseau de télécommunication (4) est un réseau de type internet.

43. Point d'accès réseau (2) selon l'une des revendications 33 à 42, **caractérisé par** des moyens permettant de choisir la langue du contenu desdits signaux audio obtenus suite à ladite conversion des messages codés sous forme sémantique.

44. Procédé de communication entre une plate-forme pour système de téléservice vocal automatique (1), et au moins un second dispositif (30) connecté à ladite plate-forme par l'intermédiaire d'un point d'accès réseau (2) et d'un réseau de télécommunication , **caractérisé par** les étapes suivantes :
ledit second dispositif (30) requiert l'établissement d'une connexion à travers ledit point d'accès réseau (2) avec ladite plate-forme (1),
ladite connexion est établie à travers ledit réseau de télécommunication (4),
ladite plate-forme (1) diffuse au moins un message vocal codé sous forme sémantique transmis à travers ledit réseau de télécommunication (4) vers ledit point d'accès réseau (2),
ledit point d'accès réseau (2) convertit grâce à des moyens de synthèse de voix (20) lesdits messages codés sous forme sémantique en signaux audio,
lesdits signaux audio sont transférés vers ledit second dispositif (30) où ils peuvent être écoutés par l'utilisateur dudit second dispositif.

45. Procédé selon la revendication précédente, **caractérisé en ce qu'**il comporte en outre au moins une fois la succession d'opérations suivantes :
ledit second dispositif (30) transmet au moins un signal audio audit point d'accès réseau (2),
ledit point d'accès réseau (2) convertit le ou lesdits signaux audio en message codé sous forme sémantique grâce à des moyens de reconnaissance de parole (20),
ledit point d'accès réseau (2) expédie vers ladite plate-forme (1), à travers ledit réseau de télécommunication (4), le ou lesdits messages codés sous forme sémantique,
ladite plate-forme (1) reçoit le ou lesdits messages codés sous forme sémantique.

46. Procédé selon la revendication précédente, **caractérisé par** une étape au cours de laquelle ladite plate-forme (1) analyse lesdits messages vocaux codés sous forme sémantique expédiés par ledit au moins un second dispositif (30) et détermine une réponse à expédier dans ledit réseau de télécommunication (4) dépendant desdits messages reçus.

47. Procédé selon l'une des revendications 44 à 46, **caractérisé en ce que** ledit codage de message sous forme sémantique optimise la longueur de messages codés susceptibles d'être transmis fréquemment à travers ledit réseau.

48. Procédé selon l'une des revendications 44 à 47, **caractérisé en ce que** ledit code inclut une représentation de la prédiction sémantique des messages.

49. Procédé selon l'une des revendications 44 à 48, **caractérisé en ce que** ledit codage de message sous forme sémantique utilise des informations caractérisant la voix et/ou la prosodie .

50. Procédé selon l'une des revendications 44 à 49, **caractérisé en ce que** les messages reçus de ladite plate-forme (1) sont stockés dans une mémoire de type cache (22).

51. Procédé selon la revendication précédente, **caractérisé en ce que** ladite mémoire de type cache (22) stocke les messages codés sous forme sémantique.

52. Procédé selon la revendication 50, **caractérisé en ce que** ladite mémoire de type cache (22) stocke les messages décodés sous forme de signaux audio.

53. Procédé selon l'une des revendications 44 à 52, **caractérisé en ce que** ledit réseau de télécommunication (4) est un réseau à transmission de paquet.

54. Procédé selon l'une des revendications 44 à 53, **caractérisé en ce que** ledit réseau de télécommunication (4) est un réseau de type internet.

55. Procédé selon la revendication précédente, **caractérisé en ce que** ledit réseau est un réseau à transmission de paquets, et **en ce que** plusieurs messages peuvent être multiplexés à l'intérieur de chaque paquet.

56. Support de données informatiques pouvant être lu par un dispositif programmable connecté à un réseau internet, stockant un programme d'instructions exécutable par ledit dispositif pour exécuter les opérations effectuées par ledit point d'accès réseau dans le procédé de l'une des revendications 44 à 55.

57. Support de données informatiques pouvant être lu par un dispositif programmable connecté à un réseau internet, stockant un programme d'instructions exécutable par ledit dispositif pour exécuter les opérations effectuées par ladite plate-forme pour système de téléservice vocal automatique (1) dans le procédé de l'une des revendications 44 à 55.

58. Système de diffusion d'informations vocales à travers un réseau de télécommunication à transmission de paquets (4), comprenant les éléments suivants :
des moyens (10) de diffusion de messages dans ledit réseau et de gestion de dialogue avec l'utilisateur,
des moyens (20) de synthèse de voix,
**caractérisé en ce que** lesdits moyens de diffusion de messages dans ledit réseau et de gestion de dialogue avec l'utilisateur sont centralisés dans une plate-forme pour système de téléservice vocal automatique (1), **en ce que** lesdits moyens de synthèse de voix sont distribués dans une pluralité de points d'accès réseau (2) répartis dans ledit réseau (4), et **en ce que** lesdits messages sont transmis entre ladite plate-forme (1) et lesdits points d'accès réseau (2) sous forme codée, ledit code incluant une représentation sémantique des messages.

59. Système selon la revendication précédente, **caractérisé en ce que** l'utilisateur peut écouter lesdits messages en établissant une connexion avec un desdits points d'accès réseau à travers un réseau de télécommunication (3).

## Patentansprüche

1. System zur Aussendung von Sprachdaten über ein Telekommunikationsnetz (4), umfassend folgende Elemente:
mindestens eine mit dem sogenannten Telekommunikationsnetz verbundene Einrichtung (1), die Mittel (10) zur Aussendung der Mitteilungen in das sogenannte Netz umfasst,
mindestens eine zweite Einrichtung (30), die die Erstellung einer Verbindung mit der sogenannten ersten Einrichtung (1) durch das sogenannte Telekommunikationsnetz (4) ermöglicht und mit akustischen Sendemitteln zur Anhörung von Audiosignalen versehen ist, die den von der sogenannten ersten Einrichtung ausgesendeten Mitteilungen entsprechen,
**dadurch gekennzeichnet, dass** die sogenannten Mitteilungen über das Telekommunikationsnetz in kodierter Form übertragen werden, wobei der sogenannte Code eine semantische Darstellung der Mitteilungen enthält und,
dass die sogenannte Einrichtung (30) mit dem sogenannten Telekommunikationsnetz (4) über eine oder mehrere verteilten Netzzugangsstellen (2) in Verbindung stehen, die Sprachsynthetisierungsmittel (20) umfassen, die dafür geeignet sind, die sogenannten kodierten Mitteilungen in Audiosignale zu konvertieren.

2. System nach einem der vorgehenden Ansprüche, **dadurch gekennzeichnet, dass** die sogenannte erste Einrichtung (1) eine Plattform für ein automatisches Teleservice-Sprachsystem ist.

3. System nach einem der vorgehenden Ansprüche, **dadurch gekennzeichnet, dass** es mehrere geographisch verteilten Netzzugangsstellen (2) umfasst, und dass die von der sogenannten ersten Einrichtung (2) zu einer der sogenannten zweiten Einrichtung (30) ausgesendeten Mitteilungen in kodierter Form bis zu einer der sogenannten zweiten Einrichtung nahe stehenden Netzzugangsstelle (2) übertragen, in Audiosignale in der sogenannten Netzzugangsstelle (2) synthetisiert und in Form Audiosignale zwischen der sogenannten Netzzugangsstelle (2) und der sogenannten zweiten Einrichtung (30) übertragen werden.

4. System nach einem der vorgehenden Ansprüche, **dadurch gekennzeichnet, dass** die mindestens eine zweite Einrichtung (30) mit mindestens der sogenannten Netzzugangsstelle (2) über ein Zugangsnetz (3) verbunden ist.

5. System nach einem der vorgehenden Ansprüche, **dadurch gekennzeichnet, dass** das Telekommunikationsnetz (4) ein Paketübertragungsnetz ist.

6. System nach einem der vorgehenden Ansprüche, **dadurch gekennzeichnet, dass** das Telekommunikationsnetz (4) ein Internet-Netz ist, und dass mindestens die sogenannte zweite Einrichtung (30) ein Internet-Terminal ist.

7. System nach einem der vorgehenden Ansprüche, **dadurch gekennzeichnet, dass** das sogenannte Telekommunikationsnetz ein Paketübertragungsnetz ist und dass mehrere Mitteilungen innerhalb jedes Pakets multiplexiert werden können.

8. System nach einem der vorgehenden Ansprüche, **dadurch gekennzeichnet, dass** die sogenannten Netzzugangsstellen (2) Spracherkennungsmittel (20), die dazu fähig sind, von der mindestens einer sogenannten zweiten Einrichtung (30) ermittelte Audio-Signale in kodierte Mitteilungen, die eine semantische Darstellung der sogenannten Signale enthalten, zu konvertieren, und Mittel zum Abschicken der kodierten Mitteilungen in das sogenannte Telekommunikationsnetz (4) umfassen, und dass die mindestens eine sogenannte erste Einrichtung (1) für die Entgegennahme der sogenannten kodierten Mitteilungen geeignet ist.

9. System nach dem vorgehenden Anspruch, **dadurch gekennzeichnet, dass** die sogenannte Plattform für ein automatisches Teleservice-Sprachsystem (1) interaktive Dialoge ermöglicht und in der Lage ist, die durch die mindestens eine sogenannte zweite Einrichtung (30) versendete sogenannte kodierte Mitteilungen zu analysieren und entsprechend den entgegengenommenen Mitteilungen eine Rückmeldung in das sogenannte Telekommunikationsnetz (4) auszusenden.

10. System nach einem der vorgehenden Ansprüche, **dadurch gekennzeichnet, dass** die sogenannten Mittel zur Aussendung der Mitteilungen in das sogenannte Netz Mittel (10) zur Speicherung der eine semantische Darstellung enthaltenden kodierten Mitteilungen und Mittel zur Wiedergabe der sogenannten Mitteilungen umfassen.

11. System nach einem der vorgehenden Ansprüche, **dadurch gekennzeichnet, dass** die sogenannten Mittel zur Aussendung der Mitteilungen in das sogenannte Netz Mittel (10) zur Speicherung der Mitteilungen in Audioform, Lesemittel zum Ablesen der gespeicherten sogenannten Mitteilungen und Spracherkennungsmittel umfassen, die fähig sind, die sogenannten Audiosignale in eine semantische Darstellung einbeziehende kodierte Mitteilungen zu konvertieren.

12. System nach einem der vorgehenden Ansprüche, **dadurch gekennzeichnet, dass** die sogenannte semantische Darstellung die Länge der codierten Mitteilungen, die häufig über das sogenannte Netz übertragbar sind, optimiert.

13. System nach einem der vorgehenden Ansprüche, **dadurch gekennzeichnet, dass** der sogenannte Code eine Darstellung der semantische Prädiktion der Mitteilungen beinhaltet.

14. System nach einem der vorgehenden Ansprüche, **dadurch gekennzeichnet, dass** die sogenannten kodierten Mitteilungen sprach- bzw. prosodiekennzeichnende Daten umfassen.

15. System nach einem der vorgehenden Ansprüche, **dadurch gekennzeichnet, dass** die mindestens eine sogenannte Netzzugangsstelle (2) einen Cache-Speicher (22) umfasst, der die durch die sogenannte erste Einrichtung (1) geschickten Mitteilungen speichert.

16. System nach einem der vorgehenden Ansprüche, **dadurch gekennzeichnet, dass** der sogenannte Cache-Speicher(22) die Mitteilungen in kodierter Form einschließlich der semantischen Form speichert.

17. System nach Anspruch 15, **dadurch gekennzeichnet, dass** der Cache-Speicher (22) die aus den sogenannten kodierten Mitteilungen synthetisierten Audio-Mitteilungen speichert.

18. System nach einem der vorgehenden Ansprüche, **dadurch gekennzeichnet, dass** mindestens einige Sprachsynthetisierungsmittel (20), die kodierten Mitteilungen in Audio-Signale konvertieren können, in einer zweiten Einrichtung (30) eingebaut sind.

19. System nach vorgehendem Anspruch, **dadurch gekennzeichnet, dass** die sogenannte Sprachsynthetisierungsmittel in Form eines Plug-in Moduls für einen Internet-Navigator implementiert sind.

20. System nach einem der vorgehenden Ansprüche, **dadurch gekennzeichnet, dass** die sogenannten Sprachsynthetisierungsmittel (21), die die sogenannten kodierten Mitteilungen mit einer semantischen Darstellung in Audio-Signale konvertieren können, mittels eines informatischen Moduls programmiert sind, und dass die sogenannte erste Einrichtung (1) und die mindestens eine Netzzugangsstelle (2) ergänzende Mittel umfassen, die dafür geeignet sind, das informatische Modul von der sogenannten ersten Einrichtung (1) aus zu der mindestens einen Netzzugangsstelle (2) herunterzuladen.

21. System nach eine der Ansprüche 3 bis 20, **dadurch gekennzeichnet, dass** es mehrere auf mehreren geographischen Gebieten verteilten Netzzugangsstellen (2) umfasst, und dass die Sprache der Audio-Signale, die aus den durch die sogenannten Sprachsynthetisierungsmittel (20) sogenannten kodierten Mitteilungen synthetisiert wurden, von der herrschenden Hauptsprache in dem geographischem Ort der sogenannten Zugangsstelle (2) abhängt.

22. System nach einem der vorgehenden Ansprüche, **dadurch gekennzeichnet, dass** die Sprache der aus der sogenannten kodierten Mitteilungen synthetisierten sogenannten Audio-Signale von dem Benutzer der mindestens einen zweiten Einrichtung (30) bestimmt wird.

23. Plattform für ein automatisches Teleservice-Sprachsystem (1) zur Verbindung mit einem Telekommunikationsnetz (4), wobei sie Mittel zur Generierung von Sprachmitteilungen und zu deren Aussendung in das sogenannte Telekommunikationsnetz (4) umfasst, **dadurch gekennzeichnet, dass** die sogenannten Mitteilungen in kodierter Form in das sogenannte Telekommunikationsnetz ausgesendet werden, wobei der Code eine semantische Darstellung der sogenannten Mitteilungen einbezieht.

24. Plattform nach vorgehendem Anspruch, **dadurch gekennzeichnet, dass** die sogenannten Mittel zur Aussendung der Mitteilungen in das sogenannte Netz aus Speichermitteln (10) zur Speicherung der kodierten Mitteilungen und aus Lesemitteln zum Ablesen der gespeicherten Mitteilungen bestehen.

25. Plattform nach Anspruch 23, **dadurch gekennzeichnet, dass** die sogenannten Mittel zur Aussendung der Mitteilungen in das sogenannte Netz Speichermittel (10) zur Speicherung der sogenannten Mitteilungen in Form Audiosignale und Lesemittel zum Ablesen der sogenannten gespeicherten Mitteilungen sowie Spracherkennungsmittel aufweisen, die dafür geeignet sind, die sogenannten Audiosignale in eine semantische Darstellung einschließende kodierte Mitteilungen zu konvertieren.

26. Plattform nach einem der Ansprüche 23 bis 25, **dadurch gekennzeichnet, dass** sie interaktive Dialoge ermöglicht und in der Lage ist, über das sogenannte Netz (4) entgegengenommene, eine semantische Darstellung einschließende kodierte Mitteilungen zu analysieren und eine von den sogenannten entgegengenommene Mitteilungen abhängige Rückmeldung auszusenden.

27. Plattform nach einem der Ansprüche 23 bis 26, **dadurch gekennzeichnet, dass** die sogenannte semantische Darstellung die Länge der codierten Mitteilungen, die häufig über das sogenannte Netz übertragbar sind, optimiert.

28. Plattform nach einem der Ansprüche 23 bis 27, **dadurch gekennzeichnet, dass** der sogenannte Code eine Darstellung der semantischen Prädiktion der Mitteilungen beinhaltet.

29. Plattform nach einem der Ansprüche 23 bis 28, **dadurch gekennzeichnet, dass** die sogenannten kodierten Mitteilungen sprach- bzw. prosodiekennzeichnende Daten umfassen.

30. Plattform nach einem der Ansprüche 23 bis 29, **dadurch gekennzeichnet, dass** sie mit einem Telekommunikationsnetz (4) mit Paketübertragung verbindbar ist.

31. Plattform nach einem der Ansprüche 23 bis 30, **dadurch gekennzeichnet, dass** sie mit einem Intemet-Telekommunikationsnetz (4) verbindbar ist.

32. Plattform nach einem der Ansprüche 23 bis 31, **gekennzeichnet durch** Mittel zur Tele-Exportierung eines informatischen Sprachsynthetisierungsmoduls über das sogenannte Telekommunikationsnetz (4), welches Modul, das die Konvertierung der sogenannten kodierten Mitteilungen mit einer semantischen Darstellung in Audio-Signale ermöglicht.

33. Netzzugangsstelle (2), die mit einem Telekommunikationsnetz mit Paketübertragung verbindbar ist und Mitteln zur Erstellung einer Verbindung mit einer mit dem sogenannten Netz verbundenen weiteren Einrichtung (1) und zur Entgegennahme von Mitteilungen , insbesondere durch die weitere Einrichtung ausgesendeten Sprachmitteilungen, umfasst.
**gekennzeichnet durch** Sprachsynthetisierungsmittel (20), die fähig sind, eine semantische Darstellung umfassende **durch** die weitere Einrichtung ausgesendete kodierte Sprachnachriten in Audio-Signale umzuwandeln und **durch** Mittel zur Aussendung der sogenannten Audiosignalen in Richtung mindestens einer zweiten Einrichtung (30).

34. Netzzugangsstelle (2) nach vorgehendem Anspruch, **gekennzeichnet durch** Spracherkennungsmittel, die fähig sind, von der mindestens einen zweiten Einrichtung (30) empfangenen Audio-Signale in kodierte Sprachmitteilungen zu konvertieren, die eine semantische Darstellung umfassen, und **durch** Mittel (21) zur Aussendung der in semantischer form kodierten Mitteilungen in das sogenannte Telekommunikationsnetz (4) mit Paketübertragung.

35. Netzzugangsstelle (2) nach einem der Ansprüche 33 oder 34, **dadurch gekennzeichnet, dass** die sogenannte semantische Darstellung die Länge der codierten Mitteilungen, die häufig über das sogenannte Netz übertragbar sind, optimiert.

36. Netzzugangsstelle (2) nach einem der Ansprüche 33 bis 35, **dadurch gekennzeichnet, dass** der sogenannte Code eine Darstellung der semantischen Prädiktion der Mitteilungen beinhaltet.

37. Netzzugangsstelle (2) nach einem der Ansprüche 33 bis 36, **dadurch gekennzeichnet, dass** die sogenannten kodierten Mitteilungen sprach- bzw. prosodiekennzeichnende Daten umfassen.

38. Netzzugangsstelle (2) nach einem der Ansprüche 33 bis 37, **gekennzeichnet durch** einen Cache-Speicher (22) für die entgegengenommenen Mitteilungen.

39. Netzzugangsstelle (2) nach einem der vorgehenden Ansprüche, **dadurch gekennzeichnet, dass** der sogenannte Cache-Speicher (22) die eine semantische Darstellung einschließenden kodierten Mitteilungen speichert.

40. Netzzugangsstelle (2) nach einem der vorgehenden Ansprüche, **dadurch gekennzeichnet, dass** der sogenannte Cache-Speicher (22) die aus den sogenannten kodierten Mitteilungen synthetisierten Audio-Mitteilungen speichert.

41. Netzzugangsstelle (2) nach einem der Ansprüche 33 bis 40, **gekennzeichnet durch** Mittel zur Übermittlung der aus den sogenannten kodierten Mitteilungen synthetisierten Audio-Signalen und zur Entgegennahme der auf das sogenannte Telekommunikationsnetz zu kodierenden Audio-Signale.

42. Netzzugangsstelle (2) nach einem der Ansprüche 33 bis 41, **dadurch gekennzeichnet, dass** das sogenannte Telekommunikationsnetz (4) ein Internet-Netz ist.

43. Netzzugangsstelle (2) nach einem der Ansprüche 33 bis 42, **gekennzeichnet durch** Mittel zur Auswahl der Sprache des Inhalts der sogenannten Audio-Signale, die infolge der Konvertierung der in semantischer Form kodierten Mitteilungen erhalten wurden.

44. Verfahren zur Kommunikation zwischen einer Plattform für automatisches Teleservice-Sprachsystem (1) und mindestens einer zweiten Einrichtung (30), die mit der sogenannten Plattform über eine Netzzugangsstelle (2) und ein Telekommunikationsnetz verbunden ist, durch folgende Schritte **gekennzeichnet:**
die sogenannte zweite Einrichtung (30) erfordert die Erstellung einer Verbindung mit der sogenannten Plattform (1) über die sogenannte Netzzugangsstelle (2),
die sogenannte Verbindung ist durch das sogenannte Telekommunikationsnetz (4) erstellt,
die sogenannte Plattform (1) sendet mindestens eine über das sogenannte Telekommunikationsnetz (4) übertragene in semantischer Form kodierte Mitteilung an die Netzzugangsstelle (2) aus,
die sogenannte Netzzugangsstelle (2) konvertiert mit Hilfe der Sprachsynthetisierungsmittel (20) die sogenannten in semantischer Form kodierten Mitteilungen in Audio-Signale,
die sogenannten Audio-Signale werden an die zweite Einrichtung (30) übertragen, wo sie von dem Benutzer der sogenannten zweiten Einrichtung abgehört werden können.

45. Verfahren nach dem vorgehenden Anspruch, **dadurch gekennzeichnet, dass** es außerdem mindestens einmal die folgende Schrittreihenfolge umfasst :
die sogenannte zweite Einrichtung (30) übermittelt mindestens ein Audio-Signal an die Netzzugangsstelle (2),
die sogenannte Netzzugangsstelle (2) konvertiert d mit Hilfe Spracherkennungsmittels (20)as bzw. die Audio-Signale in in semantischer Form kodierte Mitteilungen,
die sogenannte Netzzugangsstelle (2) sendet zu der sogenannten Plattform (1) über das sogenannte Telekommunikationsnetz (4) die sogenannte bzw. die sogenannten in semantischer Form kodierte(n) Mitteilung(en) aus,
die sogenannte Plattform (1) nimmt die in semantischer Form kodierten Mitteilungen entgegen.

46. Verfahren nach vorgehendem Anspruch **gekennzeichnet durch** einen Schritt, bei welchem die sogenannte Plattform (1) die **durch** die mindestens eine zweite Einrichtung (30) ausgesendeten in semantischer Form kodierten Mitteilungen analysiert und eine Rückmeldung ermittelt, die in Abhängigkeit von den sogenannten erhaltenen Mitteilungen in das sogenannten Telekommunikationsnetz (4) zuzusenden ist.

47. Verfahren nach einem der vorgehenden Ansprüche 44 bis 46, **dadurch gekennzeichnet, dass** die sogenannte semantische Darstellung die Länge der codierten Mitteilungen, die häufig über das sogenannte Netz übertragbar sind, optimiert.

48. Verfahren nach einem der vorgehenden Ansprüche 44 bis 47, **dadurch gekennzeichnet, dass** der sogenannte Code eine Darstellung der semantischen Prädiktion der Mitteilungen beinhaltet.

49. Verfahren nach einem der vorgehenden Ansprüche 44 bis 48, **dadurch gekennzeichnet, dass** die sogenannte Kodierung der Mitteilungen in semantischer Form sprach- bzw. prosodiekennzeichnende Daten benutzt.

50. Verfahren nach einem der vorgehenden Ansprüche 44 bis 49, **dadurch gekennzeichnet, dass** die von der Plattform (1) erhaltenen Mitteilungen in dem Cache-Speicher (22) gespeichert sind.

51. Verfahren nach dem vorgehenden Anspruch, **dadurch gekennzeichnet, dass** der sogenannte Cache-Speicher (22) die in semantischer Form kodierten Mitteilungen speichert.

52. Verfahren nach dem Anspruch 50, **dadurch gekennzeichnet, dass** der sogenannte Cache-Speicher (22) die in Audio-Form entkodierten Mitteilungen speichert.

53. Verfahren nach einem der vorgehenden Ansprüche 44 bis 52, **dadurch gekennzeichnet, dass** das sogenannte Telekommunikationsnetz (4) ein Paketübertragungsnetz ist.

54. Verfahren nach einem der vorgehenden Ansprüche 44 bis 53, **dadurch gekennzeichnet, dass** das sogenannte Telekommunikationsnetz (4) ein Internet-Netz ist.

55. Verfahren nach dem vorgehenden Anspruch, **dadurch gekennzeichnet, dass** das sogenannte Telekommunikationsnetz ein Paketübertragungsnetz ist, und dass mehrere Mitteilungen innerhalb jedes Pakets multiplexiert werden können.

56. Informatischer Datenträger, der über eine mit dem Internet verbundene programmierbare Einrichtung abrufbar ist, der ein durch die sogenannte Einrichtung ausführbares Anweisungsprogramm speichert, um die über die sogenannte Netzzugangsstelle durchgeführten Vorgänge in dem Verfahren nach einem der Ansprüche 44 bis 55 auszuführen.

57. Informatischer Datenträger, der durch eine mit dem Internet verbundene programmierbare Einrichtung abrufbar ist, der ein durch die sogenannte Einrichtung ausführbares Anweisungsprogramm speichert, um die über die sogenannte Plattform für automatisches Teleservice-Sprachsystem (1) durchgeführten Vorgänge in dem Verfahren nach einem der Ansprüche 44 bis 55 auszuführen.

58. System zur Aussendung von Sprachdaten über ein Telekommunikationsnetz (4) mit Paketübertragung mit folgenden Elementen:
Mittel (10) zur Aussendung von Mitteilungen in das sogenannte Netz und zur Verwaltung von Dialogen mit dem Benutzer,
Sprachsynthetisierungsmittel (20),
**dadurch gekennzeichnet, dass** die sogenannten Mittel zur Aussendung von Mitteilungen in das sogenannte Netz und zur Verwaltung von Dialogen mit dem Benutzer in einer Plattform für automatisches Teleservice-Sprachsystem (1) zentralisiert sind, dass die sogenannten Sprachsynthetisierungsmittel in einer Mehrzahl von in dem sogenannten Netz (4) verteilt angeordneten Netzzugangsstellen (2) verteilt sind, und dass die sogenannten Mitteilungen zwischen der sogenannten Plattform (1) und der sogenannten Netzzugangsstelle (2) in kodierter Form übertragen sind, wobei der sogenannte Code eine semantische Darstellung der Mitteilungen enthält.

59. System nach dem vorgehenden Anspruch, **dadurch gekennzeichnet, dass** der Benutzer die sogenannten Mitteilungen abhören kann, indem er eine Verbindung mit einer der sogenannten Netzzugangsstellen über ein Telekommunikationsnetz (3) aufbaut.

## Claims

1. System for disseminating voice information through a telecommunications network (4), comprising the following elements:
at least one first device (1) connected to the said telecommunications network and including means (10) to disseminate messages in the said network,
at least a second device (30) allowing communication with the said first device (1) to be established through the said telecommunications network (4), and provided with acoustical emission means allowing listening to audio signals corresponding to the said messages disseminated by the said first device,
**characterised in that** the said messages are transmitted through the said telecommunications network in coded form, the said code including a semantic representation of the messages,
and **in that** the said second devices (30) are connected to the said telecommunications network (4) through one or more distributed network access points (2) and including voice synthesis means (20) able to convert the said coded messages into audio signals.

2. System according to one of the preceding claims <sic. claim 1>, **characterised in that** the said first device (1) is a platform for a system of automatic voice teleservice.

3. System according to one of the preceding claims, **characterised in that** it comprises a plurality of point <sic. points> of access (2) to the network distributed geographically, and **in that** the messages dispatched by the said first device (1) destined for one of the said second devices (30) are transmitted in coded form until a point of access to the network (2) dose to the said second device, synthesised into audio signals at the said point of access (2) to the network, and transmitted in the form of radio signals between the said point of access (2) to the network and the said second device (30).

4. System according to one of the preceding claims, **characterised in that** the said at least a second device (30) is connected to the said at least one point of access to the network (2) through an access network (3).

5. System according to one of the preceding claims, **characterised in that** the said telecommunications network (4) is a packet transmission network.

6. System according to one of the preceding claims, **characterised in that** the said telecommunications network (4) is an Internet type network, and **in that** the said at least a second device (30) is an Internet terminal.

7. System according to the preceding claim, **characterised in that** the said network is a packet transmission network, and **in that** a plurality of messages can be multiplexed inside each packet.

8. System according to one of the preceding claims, **characterised in that** the said network access points (2) comprise speech recognition means (20) able to convert audio signals coming from at least a second device (30) into coded messages including a semantic representation of the said signals, and means to dispatch the said coded messages in the said telecommunications network (4), and **in that** the said at least one device (1) is able to receive the said coded messages.

9. System according to the preceding claim, **characterised in that** the said platform for a system of automatic voice information (1) allows interactive dialogues, and is able to analyze the said coded messages dispatched by the said at least a second device (30) and to disseminate a response in the said telecommunications network (4) depending upon the said messages received.

10. System according to one of the preceding claims, **characterised in that** the said means for disseminating messages in the said network comprise means of storing (10) the said coded messages including a semantic representation and means of reading the said stored messages.

11. System according to one of the preceding claims, **characterised in that** the said means for disseminating messages in the said network comprise means of storing (10) the said messages in the form of audio signals and means of reading the said stored messages and of speech recognition means able to convert the said audio signals into coded messages including a semantic representation.

12. System according to one of the preceding claims, **characterised in that** the said semantic representation optimises the length of coded messages likely to be frequently transmitted through the said network.

13. System according to one of the preceding claims, **characterised in that** the said code includes a representation of the semantic prediction of the messages.

14. System according to one of the preceding claims, **characterised in that** the said coded messages include information **characterising** the voice and/or prosody.

15. System according to one of the preceding claims, **characterised in that** the said at least one point of access to the network (2) comprises a cache-type memory (22) memorising the messages dispatched by the said first device (1).

16. System according to the preceding claim, **characterised in that** the said cache-type memory (22) stores the messages in coded form, including a semantic representation.

17. System according to claim 15, **characterised in that** the said cache-type memory (22) stores the synthesised audio messages from the said coded messages.

18. System according to one of the preceding claims, **characterised in that** at least certain voice synthesis means (20) able to convert the said coded messages into audio messages are integrated into a second device (30).

19. System according to the preceding claim, **characterised in that** the said voice synthesis means are implemented in the form of a plug-in module for an Internet browser.

20. System according to one of the preceding claims, **characterised in that** the said voice synthesis means (21) able to convert the said coded messages including a semantic representation into audio signals are programmed at least by one information processing module, and **in that** the said first device (1) and the said at least one point of access to the network (2) comprise complementary means and are able to cooperate for downloading the said information processing module from the said first device (1) to the said at least one point of access to the network (2).

21. System according to one of the claims 3 to 20, **characterised in that** it comprises a plurality of network access points (2) distributed over a plurality of geographic regions, and **in that** the language of the said audio signals synthesised from the said coded messages by the said voice synthesis means (20) depends upon the predominant language at the geographic location of the said point of access (2).

22. System according to one of the preceding claims, **characterised in that** the language of the said audio signals synthesised from the said coded messages is determined by the user of the said at least a second device (30).

23. Platform for an automatic voice teleservice system (1) able to be connected to a telecommunications network (4) and comprising means to generate voice messages and to disseminate them in the said telecommunications network (4),
**characterised in that** the said messages are disseminated in the said telecommunications network in coded form, with the said code including a semantic representation of the said messages.

24. Platform according to the preceding claim, **characterised in that** the said means to disseminate messages in the said network comprise means of storing (10) the said coded messages and means of reading the said stored messages.

25. Platform according to claim 23, **characterised in that** the said means of disseminating messages in the said network comprise means of storing (10) the said messages in the form of audio signals and means of reading the said stored messages and of speech recognition able to convert the said audio signals into coded messages, including a semantic representation.

26. Platform according to one of the claims 23 to 25, **characterised in that** it allows interactive dialogues and is able to analyze coded messages, including a semantic representation, received through the said network (4) and to disseminate a response depending upon the said messages received.

27. Platform according to one of the claims 23 to 26, **characterised in that** the said semantic representation optimises the length of coded messages likely to be transmitted frequently through the said network.

28. Platform according to one of the claims 23 to 27, **characterised in that** the said code includes a representation of the semantic prediction of the messages.

29. Platform according to one of the claims 23 to 28, **characterised in that** the said coded messages include information **characterising** the voice and/or prosody.

30. Platform according to one of the claims 23 to 29, **characterised in that** it is able to connected to a packet transmission telecommunications network (4).

31. Platform according to one of the claims 23 to 30, **characterised in that** it is able to be connected to an Internet-type telecommunications network (4).

32. Platform according to one of the claims 23 to 31, **characterised by** means making it possible to tele-export through the said telecommunications network (4) an information-processing module for voice synthesis permitting conversion of the said coded messages including a semantic representation into audio signals.

33. Network access point (2) able to be connected to a packet-switching telecommunications network and comprising means to establish communication with another device (1) connected to the said network and to receive messages, in particular voice messages disseminated by the said other device,
**characterised by** voice synthesis means (20) able to convert coded voice messages including a semantic representation disseminated by the said other device (1) into audio signals, and by means to dispatch through an access network (3) the said audio signals to at least a second device (30).

34. Network access point (2) according to the preceding claim, **characterised by** speech recognition means able to convert audio signals received from at least a second device (30) into coded messages including a semantic representation, and by means (21) to dispatch the said coded messages in semantic form in the said packet-switching telecommunications network (4).

35. Network access point (2) according to one of the claims 33 or 34, **characterised in that** the said semantic representation optimises the length of coded messages likely to be transmitted frequently through the said network.

36. Network access point (2) according to one of the claims 33 to 35, **characterised in that** the said code includes a representation of the semantic prediction of messages.

37. Network access point (2) according to one of the claims 33 to 36, **characterised in that** the said coded messages include information **characterising** the voice and/or the prosody.

38. Network access point (2) according to one of the claims 33 to 37, **characterised by** a cache-type memory (22) for the messages received.

39. Network access point (2) according to the preceding claim, **characterised in that** the said cache-type memory (22) stores the messages in coded form including a semantic representation.

40. Network access point (2) according to the preceding claim, **characterised in that** the said cache-type memory (22) stores the messages audio synthesised from the said coded messages.

41. Network access point (2) according to one of the claims 33 to 40, **characterised by** means to dispatch signals audio synthesised from the said coded messages or to receive audio signals to be coded on the said telecommunications network.

42. Network access point (2) according to one of the claims 33 to 41, **characterised in that** the said telecommunications network (4) is an Internet-type network.

43. Network access point (2) according to one of the claims 33 to 42, **characterised by** means making it possible to select the language of the content of the said audio signals obtained following the said conversion of the coded messages in semantic form.

44. Method of communication between a platform for an automatic voice teleservice system (1), and at least a second device (30) connected to the said platform through a network access point (2) and a telecommunications network, **characterised by** the following steps:
the said second device (30) requires the establishment of a connection through the said network access point (2) with the said platform (1),
the said connection is established through the said telecommunications network (4),
the said platform (1) disseminates at least one coded voice message in semantic form transmitted through the said telecommunications network (4) to the said network access point (2),
the said network access point (2) converts, through the expedient of voice synthesis means (20), the said code messages in semantic form into audio signals,
the said audio signals are transferred to the said second device (30) where they can be listened to by the user of the said second device.

45. Method according to the preceding claim, **characterised in that** it further comprises at least once the following series of operations:
the said second device (30) transmits at least one audio signal to the said network access point (2),
the said network access point (2) converts the audio signal or signals into coded message in semantic form through the expedient of speech recognition means (20),
the said network access point (2) dispatches to the platform (1), through the said telecommunications network (4), the said coded message or messages in semantic form,
the said platform (1) receives the said coded message or messages in semantic form.

46. Method according to the preceding claim, **characterised by** a step during which the said platform (1) analyzes the said coded voice messages in semantic form dispatched by the said at least a second device (30), and determines a response to dispatch in the said telecommunications system (4) depending upon the said messages received.

47. Method according to one of the claims 44 to 46, **characterised in that** the said message coding in semantic form optimises the length of coded messages likely to be transmitted frequently through the said network.

48. Method according to one of the claims 44 to 47, **characterised in that** the said code includes a representation of the semantic prediction of the messages.

49. Method according to one of the claims 44 to 48, **characterised in that** the said message coding in semantic form makes use of information **characterising** the voice and/or the prosody.

50. Method according to one of the claims 44 to 49, **characterised in that** the messages received from the said platform (1) are stored in a cache-type memory (22).

51. Method according to the preceding claim, **characterised in that** the said cache-type memory (22) stores the coded messages in semantic form.

52. Method according to claim 50, **characterised in that** the said cache-type memory (22) stores the decoded messages in the form of audio signals.

53. Method according to one of the claims 44 to 52, **characterised in that** the said telecommunications network (4) is a packet transmission network.

54. Method according to one of the claims 44 to 53, **characterised in that** the said telecommunications network (4) is an Internet-type network.

55. Method according to the preceding claim, **characterised in that** the said network is a packet transmission network, and **in that** a plurality of messages can be multiplexed inside each packet.

56. Computerised data carrier able to be read by a programmable device connected to an Internet network, storing a program of instructions able to be executed by the said device for executing the operations carried out by the said network access point in the method according to one of the claims 44 to 55.

57. Computerised data carrier able to be read by a programmable device connected to an Internet network, storing a program of instructions able to be executed by the said device for executing the operations carried out by the said platform for an automatic voice teleservice system (1) in the method according to one of the claims 44 to 55.

58. System for disseminating voice information through a packet-switching telecommunications system (4), comprising the following elements:
means (10) for disseminating messages in the said network and of management of dialogue with the user,
voice synthesis means (20),
**characterised in that** the said means for disseminating messages in the said network and of management of dialogue with the user are centralised in a platform for an automatic voice teleservice system (1), **characterised in that** the said voice synthesis means are distributed in a plurality of network access points (2) distributed in the said network (4), and **in that** the said messages are transmitted between the said platform (1) and the said network access points (2) in coded form, the said code including a semantic representation of the messages.

59. System according to the preceding claim, **characterised in that** the user can listen to the said messages by establishing a connection with one of the said network access points through a telecommunications network (3).
